# EUROPÄISCHE PATENTANMELDUNG

(11) **EP 2 617 553 A2**
(43) Veröffentlichungstag der Anmeldung: **24.07.2013**
(21) Anmeldenummer: 13151707.0
(22) Anmeldetag: 17.01.2013
(51) Int. Cl.: B29C 65/76, B29C 65/48, F16B 11/00, C09J 5/06

(54) **Verbinden von Faserverbundbauteilen mittels Karosserieklebstoff**

(30) Priorität: 23.01.2012 DE 102012200865
(71) Anmelder: Bayerische Motoren Werke Aktiengesellschaft, 80809 München (DE)
(72) Erfinder: Brauch, Michael, 85598 Baldham (DE)

(57) **Zusammenfassung**

Es wird eine Verwendung von heisshärtendem Karosserieklebstoff (14) zum stoffschlüssigen Verbinden von Bauteilen (11,12), wobei mindestens ein erstes (11) der Bauteile (11,12) ein Faserverbundmaterial mit zumindest einem trennmittelbehafteten Verbindungsabschnitt (15) zum Verbinden des Bauteils (11) mit mindestens einem zweiten (12) der Bauteile (11,12) umfasst.
Des Weiteren wird eine Bauteilanordnung (10) mit mindestens zwei entsprechend stoffschlüssig verbundenen Bauteilen (11,12) sowie ein Verfahren zum bereitstellen einer entsprechenden Bauteilanordung (10) bereitgestellt.

## Beschreibung

Die Erfindung betrifft eine Verwendung von heißhärtendem Karosserieklebstoff zum stoffschlüssigen Verbinden von Bauteilen, insbesondere von Faserverbundbauteilen, mit weiteren Bauteilen sowie eine mittels heißhärtenden Karosserieklebstoffs verbundene Bauteilanordnung und ein Verfahren zum Bereitstellen der Bauteilanordnung.

Faserverbundwerkstoffe halten verstärkt Einzug in verschiedenste Bereiche der Technik. Sie ermöglichen eine leichte und gleichzeitig steife Bauteilgestaltung und eignen sich daher insbesondere für Anwendungsfelder, in welchen ein möglichst geringes Eigengewicht von Bauteilen von entscheidender Bedeutung ist. Hierzu zählt neben der Luft- und Raumfahrt in zunehmendem Maße auch das Automobil.

Es werden erhebliche Anstrengungen unternommen, Faserverbundwerkstoffe in einer Großserienproduktion zu verarbeiten, die große Stückzahlen und kurze Taktzeiten fordert. Hierbei hat sich eine Verklebung von Faserverbundbauteilen als eine schnelle und zuverlässige Möglichkeit zum Verbinden von Bauteilen erwiesen.

Jedoch hat sich auch gezeigt, dass eine Haftung und Tragfähigkeit von geklebten Bauteilen aus Kunststoff und/oder faserverstärktem Kunststoff, die mit üblichen für Faserverbundwerkstoffe vorgesehenen Klebstoffen verklebt sind, je nach verwendetem Klebstoffhärtemechanismus stark von einer vorhergehenden Oberflächenvorbehandlung bzw. einem Oberflächenzustand der zu klebenden Verbindungsfläche abhängig ist.

Dies liegt unter anderem darin begründet, dass im Gegensatz zu anderen Werkstoffen bei einer Herstellung von Faserverbundbauteilen Trennmittel erforderlich sind, um das Bauteil nach einem Formgebungsprozess aus einer Herstellungsform lösen zu können. Die Trennmittel setzen sich insbesondere an einer Oberfläche des erzeugten Bauteils ab und beeinflussen eine anschließende Verklebung derart, dass eine ausreichende Klebstoffhaftung mit bisherigen Klebstoffen verhindert oder zumindest erheblich reduziert wird.

Es muss daher zwingend eine Oberflächenbehandlung des Bauteils zumindest im Bereich eines für die Verbindung mit einem anderen Bauteil vorgesehenen Verbindungsabschnitts vorgenommen werden, um zumindest lokal das Trennmittel zu entfernen und die Oberfläche in diesem Abschnitt zu reinigen. Unter Umständen ist darüber hinaus eine sogenannte Aktivierung der Oberfläche vor einer anschließenden Verklebung erforderlich. Diese Oberflächenreinigung bzw. -Aktivierung kann durch chemische und/oder physikalische Prozesse erzielt werden. Zum Beispiel wird die Oberfläche abrasiv angeraut und chemisch gereinigt. Diese Vorgehensweise kommt insbesondere bei kalthärtenden Zweikomponentenklebstoffen zum Einsatz.

Als nachteilig für eine Großserienfertigung erweist sich hierbei der beschriebene zusätzliche Schritt der Oberflächenbehandlung, der unter anderem zeit- und kostenintensiv ist.

Aufgabe der Erfindung ist es daher ein vereinfachtes Verkleben von Faserverbundbauteilen zu ermöglichen.

Diese Aufgabe wird erfindungsgemäß gelöst mittels einer Verwendung eines heißhärtenden Karosserieklebstoffs gemäß Patentanspruch 1, einer Bauteilanordnung mit den Merkmalen des Patentanspruchs 3 sowie einem Verfahren zum Bereitstellen einer Bauteilanordnung nach Patentanspruch 5. Weitere vorteilhafte Ausgestaltungen ergeben sich aus den jeweils abhängigen Ansprüchen.

Demnach wird eine Verwendung von heißhärtendem Karosserieklebstoff zum stoffschlüssigen Verbinden bzw. Verkleben von Bauteilen vorgeschlagen, wobei mindestens ein erstes der Bauteile ein Faserverbundmaterial mit zumindest einem trennmittelbehafteten Verbindungsabschnitt zum Verbinden des Bauteils mit mindestens einem zweiten der Bauteile umfasst.

Heißhärtender Karosserieklebstoff zeichnet sich dadurch aus, dass dieser zur Verklebung von Blechteilen konfiguriert ist und aufgrund hoher Scherfestigkeitswerte zum Verkleben von großflächigen Karosserieteilen aus Blech geeignet ist. Der Karosserieklebstoff kann je nach Ausgestaltung mit oder ohne Vorerhitzung bei einem Auftragen eingesetzt werden. Das Faserverbundmaterial umfassende erste Bauteil zeichnet sich dadurch aus, dass insbesondere der für die Verklebung vorgesehene Verbindungsabschnitt aus dem Faserverbundmaterial und Trennmittelbehaftet ist. Dies bedeutet, dass das Faserverbundbauteil unbehandelt, also ohne nachträgliche Oberflächenbehandlung aus einem vorgelagerten Herstellungsprozess entnommen und ohne weiteres zu einer Verklebung mit anderen Bauteilen herangezogen werden kann. Eine aufwendige Oberflächenbehandlung oder -Reinigung kann somit vollständig entfallen. Selbstverständlich kann das erste Bauteil nicht nur im Bereich des Verbindungsabschnitts trennmittelbehaftet sei, sondern - wie beschrieben - auch in anderen Abschnitten oder auf seiner gesamten Oberfläche Trennmittel aufweisen. Auch kann das Bauteil lediglich teilweise oder vollständig aus Faserverbundmaterial bestehen. Entscheidend ist jedoch, dass zumindest der Verbindungsabschnitt Faserverbundmaterial umfasst.

Im Rahmen dieser Beschreibung werden als Faserverbundmaterialien insbesondere faserverstärkte Kunststoffe verstanden. Die verwendeten Fasern können jede Art von Fasern umfassen, welche sich zur Verstärkung von Kunststoffen eignen, insbesondere Glasfasern, Kohlefasern, Metall- und/oder Aramidfasern.

Vorzugsweise ist der heißhärtende Karosserieklebstoff ein Einkomponenten-Klebstoff. Dies bedeutet, dass der Klebstoff beispielsweise durch Wärmeeinwirkung aktiviert bzw. ausgehärtet wird und hierzu nicht eine zweite Komponente erforderlich ist, wie dies bei Zweikomponenten-Klebstoffen der Fall ist.

Es wird außerdem eine Bauteilanordnung mit mindestens zwei Bauteilen bereitgestellt, wobei die Bauteile mittels heißhärtenden Karosserieklebstoffs stoffschlüssig miteinander verbunden sind und mindestens ein erstes der Bauteile ein Faserverbundmaterial mit zumindest einem trennmittelbehafteten Verbindungsabschnitt zum Verbinden des Bauteils mit einem zweiten der Bauteile umfasst.

Gemäß einer Ausführungsform umfasst mindestens ein zweites der mindestens zwei Bauteile Metall, Glas, Kunststoff und/oder Faserverbundwerkstoff. Die vorgeschlagene Verklebung ermöglicht somit eine vielfältige Verbindung von Faserverbundbauteilen mit weiteren Bauteilen, die ganz oder zumindest teilweise aus den genannten Materialien bestehen und mit diesem jeweiligen Materialabschnitt mit dem Verbindungsabschnitt des ersten Bauteils verklebt werden sollen.

Ferner wird ein Verfahren zum Bereitstellen der beschriebenen Bauteilanordnung mit den folgenden Schritten vorgeschlagen:
- Bereitstellen von mindestens zwei miteinander zu verbindenden Bauteilen, wobei mindestens ein erstes der Bauteile ein Faserverbundmaterial mit zumindest einem trennmittelbehafteten Verbindungsabschnitt zum Verbinden des Bauteils mit mindestens einem zweiten der Bauteile umfasst, und
- Verbinden der mindestens zwei Bauteile mittels heißhärtenden Karosserieklebstoffs, und
- Wärmebehandeln der verbundenen Bauteile zum Härten des heißhärtenden Karosserieklebstoffs.

Es werden also die zur Verklebung vorgesehenen Bauteile bereitgestellt und beispielsweise der heißhärtende Karosserieklebstoff auf eines oder mehrere der Bauteile aufgetragen. Der heißhärtende Karosserieklebstoff wird insbesondere in mindestens einem zur Verbindung vorgesehenen Verbindungsabschnitt des jeweiligen Bauteils vorgesehen. Anschließend werden die Bauteile miteinander in Verbindung gebracht. Optional kann dieser Schritt eine zusätzliche Druckbeaufschlagung zumindest im Bereich der Verklebung umfassen. Anschließend erfolgt eine Zuführung von Hitze in Form der Wärmebehandlung, um den heißhärtenden Karosserieklebstoff zu härten. Beispielsweise kann hierzu ein Lacktrockner eingesetzt werden bzw. die Härtung oder zumindest ein teilweises Aushärten im Rahmen einer Lacktrocknung der Bauteilanordnung erfolgen.

Die Wärmebehandlung bewirkt neben einer zumindest teilweisen Aushärtung des heißhärtenden Karosserieklebstoffs, dass ein Diffusionsprozess einsetzt bzw. unterstützt wird, bei dem Trennmittel von der Oberfläche des Faserverbundbauteils, genauer gesagt von dem trennmittelbehafteten Verbindungsabschnitt, in den heißhärtenden Karosserieklebstoff diffundiert und in diesem aufgenommen wird. Es erfolgt somit eine nachträgliche Entfernung des Trennmittels von dem Verbindungsabschnitt im Nachgang zu einer erfolgten Verklebung im Rahmen des Aushärtevorgangs. Es kann somit auf eine vorhergehende Oberflächenvorbehandlung und Reinigung verzichtet und eine zuverlässige und feste Klebeverbindung zwischen den Bauteilen hergestellt werden.

Der Schritt des Wärmebehandelns kann beispielsweise mit einer Temperatur von mindestens 150°C, vorzugsweise mindestens 160°C, erfolgen.

Die Erfindung wird nachfolgend unter Bezugnahme auf die Zeichnungen anhand eines Ausführungsbeispiels erläutert. Es zeigen:
- Fig. 1: eine Bauteilanordnung mit zwei stoffschlüssig verbundenen Bauteilen,und
- Fig. 2: einen schematisch dargestellten Ablauf eines Verfahrens zum Bereitstellen einer Bauteilanordnung.

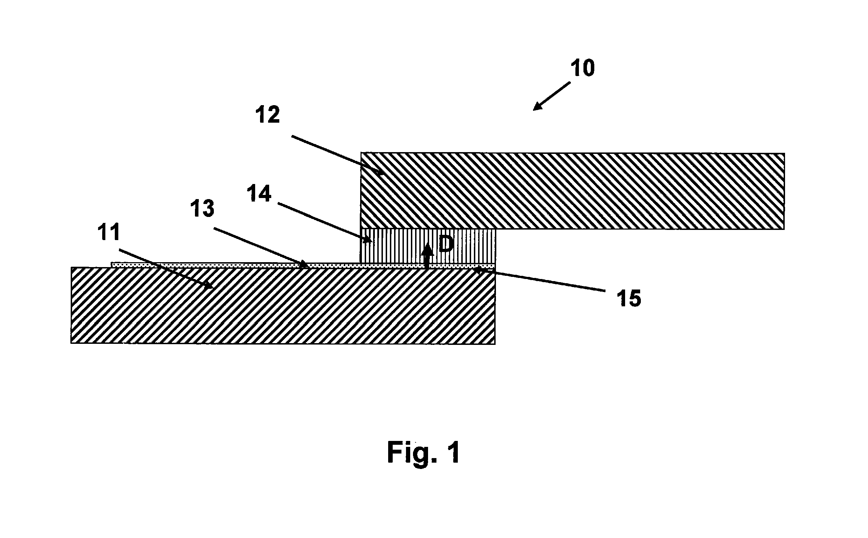

Fig. 1 zeigt eine schematisch dargestellte Bauteilanordnung 10 mit zwei Bauteilen 11,12, wobei die beiden Bauteile 11,12 mittels heißhärtenden Karosserieklebstoffs 14 stoffschlüssig miteinander verbunden sind und zumindest das erste 11 der beiden Bauteile 11,12 ein Faserverbundmaterial mit einer trennmittelbehafteten Oberfläche 13 umfasst, insbesondere in einem Verbindungsabschnitt 15, welcher zum Verbinden des Bauteils 11 mit einem zweiten 12 der Bauteile 11,12 vorgesehen ist.

Eine Wärmebehandlung der Bauteilanordnung 10 führt einerseits zum Aushärten des heißhärtenden Karosserieklebstoffes 14 sowie andererseits zum Diffundieren von Trennmittel aus der trennmittelbehafteten Oberfläche 13 in den heißhärtenden Karosserieklebstoff 14, so dass auf diese Weise eine nachträglich zu dem Verkleben erfolgende Entfernung des Trennmittels von dem Verbindungsabschnitt erfolgen und somit eine zuverlässige und feste Klebeverbindung zwischen den Bauteilen 11,12 hergestellt werden kann.

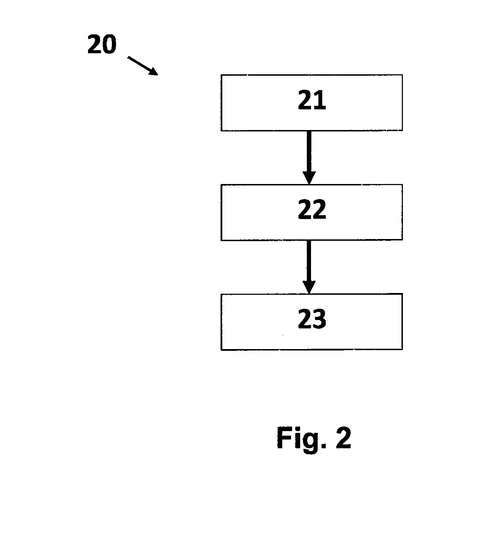

Fig. 2 zeigt einen schematisch dargestellten Ablauf eines Verfahrens 20 zum Bereitstellen einer Bauteilanordnung 10 gemäß Fig. 1 mit den folgenden Schritten:
- Bereitstellen 20 von zwei miteinander zu verbindenden Bauteilen, wobei ein erstes der Bauteile ein Faserverbundmaterial mit einem trennmittelbehafteten Verbindungsabschnitt zum Verbinden des Bauteils mit einem zweiten Bauteil umfasst, und
- Verbinden 22 der zwei Bauteile mittels heißhärtenden Karosserieklebstoffs, und
- Wärmebehandeln 23 der verbundenen Bauteile zum Härten des heißhärtenden Karosserieklebstoffs.

## Patentansprüche

1. Verwendung von heißhärtendem Karosserieklebstoff zum stoffschlüssigen Verbinden von Bauteilen (11,12), wobei mindestens ein erstes (11) der Bauteile (11,12) ein Faserverbundmaterial mit zumindest einem trennmittelbehafteten Verbindungsabschnitt (15) zum Verbinden des Bauteils (11) mit mindestens einem zweiten (12) der Bauteile (11,12) umfasst.

2. Verwendung nach Anspruch 1, **dadurch gekennzeichnet, dass** der heißhärtende Karosserieklebstoff (14) ein Einkomponenten-Klebstoff ist.

3. Bauteilanordnung mit mindestens zwei Bauteilen, wobei die Bauteile (11,12) mittels heißhärtenden Karosserieklebstoffs (14) stoffschlüssig miteinander verbunden sind und mindestens ein erstes (11) der Bauteile (11,12) ein Faserverbundmaterial mit einem trennmittelbehafteten Verbindungsabschnitt (15) zum Verbinden des Bauteils mit einem zweiten der Bauteile umfasst.

4. Bauteilanordnung nach Anspruch 3, **dadurch gekennzeichnet, dass** mindestens das zweite (12) der mindestens zwei Bauteile (11,12) Metall, Glas, Kunststoff und/oder Faserverbundwerkstoff umfasst.

5. Verfahren zum Bereitstellen einer Bauteilanordnung nach einem der Ansprüche 3 bis 4 mit den folgenden Schritten:
- Bereitstellen von mindestens zwei miteinander zu verbindenden Bauteilen (11,12), wobei mindestens ein erstes (11) der Bauteile (11,12) ein Faserverbundmaterial mit zumindest einem trennmittelbehafteten Verbindungsabschnitt (15) zum Verbinden des ersten Bauteils (11) mit mindestens einem zweiten der Bauteile (12) umfasst,
- Verbinden der mindestens zwei Bauteile (11,12) mittels heißhärtenden Karosserieklebstoffs (14), und
- Wärmebehandeln der verbundenen Bauteile (11,12) zum Härten des heißhärtenden Karosserieklebstoffs (14).

6. Verfahren nach Anspruch 5, wobei der Schritt des Wärmebehandelns mit einer Temperatur von mindestens 150°C, vorzugsweise mindestens 160°C, erfolgt.
